Europäisches Patentamt

European Patent Office

Office européen des brevets

(19)

(11) Numéro de publication : **0 631 404 A1**

(12) **DEMANDE DE BREVET EUROPEEN**

(21) Numéro de dépôt : **94401325.9**

(22) Date de dépôt : **13.06.94**

(51) Int. Cl.⁵ : **H04J 3/16, H04J 3/06**

(30) Priorité : **25.06.93 FR 9307783**

(43) Date de publication de la demande :
**28.12.94 Bulletin 94/52**

(84) Etats contractants désignés :
**DE GB**

(71) Demandeur : **FRANCE TELECOM**
**Etablissement autonome de droit public,**
**6, Place d'Alleray**
**F-75015 Paris (FR)**

(71) Demandeur : **TELEDIFFUSION DE FRANCE**
**10, rue d'Oradour sur Glane**
**F-75732 Paris Cédex 15 (FR)**

(72) Inventeur : **Fournis, Yvon**
**Ker Avalou,**
**La Ruelle des Bois**
**F-35520 Melesse (FR)**
Inventeur : **Heurlin, Robert**
**Rue du Soleil**
**F-35320 Crevin (FR)**

(74) Mandataire : **Cabinet Martinet & Lapoux**
**BP 405**
**F-78055 Saint Quentin en Yvelines Cédex (FR)**

(54) **Procédé et système pour aligner des canaux élémentaires à faible débit en un canal à débit élevé.**

(57) Le premier terminal (T1) mesure, pour chacun de N canaux à aligner, un délai de transit aller-retour de canal entre les deux terminaux (T1,T2) par rebouclage dans le second terminal (T2) du canal de voie aller sur le canal de voie retour associé formant ensemble ledit chacun des N canaux, puis par émission d'une séquence dans le canal de voie aller. Un délai de transit aller-retour de canal croisé est ensuite mesuré par ce premier terminal (T1), pour chacun des N canaux, par rebouclage dans le second terminal du canal de voie aller sur l'un respectif des canaux de voie retour des N canaux qui est différent du canal de voie retour associé audit chacun des N canaux. Des retards relatifs correcteurs entre canaux de voie aller d'une part, et entre canaux de voie retour d'autre part, sont calculés par résolution d'un système d'équations linéaires résultant de ces mesures de délais de transit aller-retour de canal et de canal croisé pour les N canaux.

FIG.1

La présente invention concerne de manière générale des réseaux de télécommunications à multiplexage temporel de canaux bidirectionnels. Plus précisément l'invention a trait à des procédé et système pour aligner des canaux élémentaires à faible débit en vue de former un canal à débit élevé, dit "hypercanal", entre deux terminaux à travers de tels réseaux de télécommunications.

L'évolution du Réseau Téléphonique Commuté (RTC) s'est opérée par modification des moyens en transmission et commutation offerts à l'usager. Dans le Réseau Téléphonique Commuté analogique, l'usager dispose d'une largeur de bande de 4 kHz et l'acheminement d'une communication est assurée à travers des commutateurs spatiaux. La numérisation de ce Réseau Téléphonique Commuté en le Réseau Téléphonique Commuté à 64 kbit/s (RTC64) a vu la transformation, d'une part, de la largeur de bande de 4 kHz offerte à chaque usager en un canal de 64 kbit/s, et d'autre part, de la technique de commutation spatiale en une technique de commutation temporelle. Le débit binaire de 64 kbit/s correspond à un débit minimal de transmission numérique satisfaisant une condition de qualité acceptable de la transmission d'un signal analogique de largeur de bande de 4 kHz, c'est-à-dire la largeur de bande retenue pour les fréquences vocales. Il résulte d'un échantillonnage du signal analogique à une fréquence deux fois supérieure à ladite largeur de bande, en des échantillons quantifiés sur 8 bits .

La numérisation jusqu'aux extrémités, c'est-à-dire jusqu'aux usagers, de ce "Réseau Téléphonique" s'est traduit par le Réseau Numérique à Intégration de Services (RNIS). Dans le cadre de ce nouveau réseau RNIS, l'offre de l'exploitant de réseau se limite à deux types d'accès, dits accès de base et accès primaire. L'accès de base offre à l'usager deux canaux de type B à 64 kbit/s et un canal de type D à 16 kbit/s tandis que l'accès primaire se décompose en 30 canaux B à 64 kbit/s et un canal D à 64 kbit/s. Ces accès se matérialisent par des trames montantes, de l'usager vers le réseau, et des trames descendantes, du réseau vers l'usager, ayant une durée de 125 $\mu s$ et partagées en des intervalles temporels de 8 bits pour les canaux B et 2 ou 8 bits pour le canal D.

L'évolution par étapes du Réseau Téléphonique Commuté analogique en le Réseau Numérique à Intégration de Services n'a néanmoins pas modifié la vocation initiale du Réseau Téléphonique consistant à offrir aux usagers des liaisons à faibles débits notamment pour des applications relatives à la transmission de la voix, ou de données à bas débit.

De nouveaux besoins pour des services à haut débit, tels que la transmission de son à haute fidélité ou d'images fixes ou animées, ne sont pas encore satisfaits par le réseau RNIS, et l'évolution prévisible de la technique temporelle asynchrone ATM (Asynchronous Transfer Mode) ne pourra satisfaire ces besoins à court terme.

Dans le cadre du RNIS, un débit élevé entre deux usagers peut néanmoins être réservé par alignement ou agrégation de N canaux B élémentaires à 64 kbit/s afin de former un hypercanal à débit élevé égal à N x 64 kbit/s.

Ces N canaux étant établis indépendamment à travers des pluralités respectives de commutateurs temporels dans le réseau RNIS, en suivant des chemins respectifs a priori différents, ceux-ci présentent des durées de transit entre les deux usagers, tant à l'aller qu'au retour, qui diffèrent.

Il en résulte que si N octets successifs sont émis selon un ordre initial prédéterminé respectivement dans N canaux successifs d'une trame, par exemple à un accès primaire, par un usager local, ledit ordre initial n'est pas a priori conservé en réception par un usager distant. Il convient alors d'aligner ces canaux afin que les retards de transit au sein du réseau soient transparents aux usagers et les N octets successifs émis soient reçus successivement selon l'ordre initial par l'usager distant.

Le brevet américain US-A-4 577 312 décrit un procédé d'alignement de canaux élémentaires à faibles débits afin de former un hypercanal à débit élevé. Selon ce procédé, un système d'alignement est rattaché à un noeud de commutation d'un réseau de télécommunications, noeud à travers lequel doit être établi, entre deux terminaux local et distant, l'hypercanal à débit élevé. Le procédé prévoit

la transmission par le système d'alignement, tant vers le terminal local que vers le terminal distant, d'une séquence prédéterminée dans chacun de canaux de voie aller des canaux bidirectionnels destinés à former partie de l'hypercanal à débit élevé,

dans chaque terminal, le rebouclage des canaux de voie aller respectivement sur les canaux de voie retour associés dirigés vers le système d'alignement, et

la mesure par le système d'alignement de durées de transit aller-retour respectivement dans les canaux établis entre système d'alignement et terminaux.

Il est supposé, selon ce procédé, que la durée de transit aller d'un canal de voie aller et la durée de transit retour d'un canal de voie retour relativement à un terminal donné sont égales. Ainsi le procédé propose que le système d'alignement calcule des retards relatifs entre canaux déduits de délais de transit aller/retour des canaux entre le système d'alignement et les deux terminaux. Pour chaque canal, un délai de transit entre les deux terminaux est pris égal à la demi-somme de deux durées de transit aller-retour relatives respectivement

2

aux deux terminaux local et distant. Après calcul de ces retards relatifs, un alignement des canaux à faibles débits est mis en oeuvre dans le système d'alignement qui retarde de manière appropriée ces différents canaux.

Ce procédé admet que, d'une part, les canaux relatifs aux deux terminaux et utilisés lors de la formation du canal à débit élevé dit hypercanal transitent tous à travers le même noeud de commutation auquel est rattaché ledit système d'alignement, et, d'autre part, pour un canal élémentaire donné, la durée de transit aller et la durée de transit retour entre le système d'alignement et un terminal sont égales. Cette seconde hypothèse exprime également qu'un canal de voie aller supporté par des trames montantes et qu'un canal de voie retour supporté par des trames descendantes, formant tous deux le canal élémentaire donné, ont des durées de transit égales. Les deux hypothèses précitées sont en pratique rarement vérifiées, et le procédé ne reste applicable que dans certaines configurations de réseau.

Par ailleurs, le brevet US-A-4 577 312 décrit seulement des moyens pour calculer des retards relatifs entre canaux dans le système d'alignement, et ne divulgue et suggère aucun moyen pour retarder les canaux après calcul de ces retards relatifs. En outre, ce brevet est limité à la formation d'un unique hypercanal à débit élevé par alignement de plusieurs canaux élémentaires à 64 kbit/s. Or il s'avère particulièrement intéressant de former plusieurs hypercanaux à débits élevés en alignant indépendamment des canaux de plusieurs groupes respectivement, par exemple dans un contexte de transmission simultanée d'images et de son à haute fidélité.

La présente invention vise à remédier aux inconvénients précités en fournissant un procédé et un système pour aligner des canaux à faibles débits en un ou plusieurs hypercanaux à débit élevé pouvant être mis en oeuvre dans n'importe quel type de réseau à multiplexage temporel de canaux bidirectionnels.

A cette fin, un procédé pour aligner I canaux élémentaires bidirectionnels à faible débit, en des canaux alignés formant un hypercanal à débit élevé, I étant un entier supérieur à 1,

chacun des canaux élémentaires étant constitué d'un canal de voie aller et d'un canal de voie retour associé au canal de voie aller, et étant établi entre des premier et second terminaux à travers un réseau à multiplexage temporel, les I canaux élémentaires subissant des délais de transit respectifs différents à travers le réseau qui sont compensés dans l'hypercanal, le procédé comprenant une mesure de I délais de transit aller-retour de canal élémentaire par réception dans le premier terminal d'une séquence prédéterminée émise par le premier terminal dans les I canaux de voie aller et réémise par rebouclages à travers le second terminal dans les I canaux de voie retour associés, respectifs

est caractérisé en ce qu'il comprend, en outre, les étapes suivantes :

rebouclage à travers le second terminal, de chacun des I canaux de voie aller sur l'un respectif des I canaux de voie retour qui est différent du canal de voie retour associé audit chacun des I canaux de voie aller, pour former I canaux bouclés croisés,

émission de la séquence prédéterminée dans les canaux de voie aller des I canaux bouclés croisés par le premier terminal,

mesure de I délais de transit aller-retour de canal croisé par réception dans le premier terminal de la séquence prédéterminée émise dans les I canaux de voie aller et réémise par rebouclages à travers le second terminal dans les canaux de voie de retour des I canaux bouclés croisés, et

calcul de 2 x I retards relatifs de voie aller et de voie retour à imposer aux canaux de voie aller et de voie retour en dépendance des délais de transit aller-retour de canal bouclé et de canal croisé mesurés.

Selon l'invention, le calcul consiste à résoudre un système d'équations linéaires dans lequel le délai de transit aller-retour mesuré d'un canal élémentaire bouclé donné est égal à la somme de délai de transit aller et délai de transit retour respectifs dans les canaux de voies aller et retour constituant le canal bouclé donné et dans lequel le délai de transit aller-retour mesuré d'un canal bouclé croisé est égal à la somme de délai de transit aller et délai de transit retour respectifs dans les canaux de voies aller et retour constituant le canal bouclé croisé donné, les délais de transit aller et délais de transit retour étant des retards relatifs par rapport à l'un desdits délais de transit déterminé de manière arbitraire.

Avantageusement, ce procédé est mis en oeuvre relativement à plusieurs groupes de canaux élémentaires comprenant chacun plusieurs canaux élémentaires afin de former plusieurs hypercanaux à débits élevés entre les deux terminaux.

L'invention est particulièrement destinée à être mise en oeuvre dans un réseau RNIS. Ainsi les canaux élémentaires sont formés au niveau des deux terminaux par des canaux temporels multiplexés dans des trames montantes et descendantes ayant une période prédéterminée. La séquence prédéterminée est constituée de mots binaires codés successifs qui résultent d'un codage pseudoaléatoire de type polynômial et qui sont émis par le premier terminal dans chaque canal de voie aller, respectivement dans des trames montantes successives pour mesurer chacun des délais de transit aller-retour de canaux élémentaires et croisés comprenant ledit chaque canal de voie aller.

Il est également prévu un système pour la mise en oeuvre du procédé dans les applications RNIS.

Le système comprenant les deux terminaux rattachés au réseau à travers des voies multiplex temporelles entrantes et sortantes, est caractérisé en ce que le premier terminal comprend des moyens de commande pour produire des mots de commande qui sont relatifs à l'établissement de canaux élémentaires, au rebouclage entre canaux de voie aller et canaux de voie retour des canaux élémentaires établis, et à la formation et la libération d'hypercanal, et qui sont émis chacun vers le second terminal dans un canal de voie aller établi libre n'appartenant pas à un hypercanal, des moyens pour mémoriser les mots codés successifs de la séquence dans une première mémoire tabulée, et pour mesurer lesdits délais de transit aller-retour de canal élémentaire et les délais de transit aller-retour croisé de canal croisé, et

pour l'un des hypercanaux ayant I canaux élémentaires bidirectionnels,

des moyens de mémoire à double accès pour mémoriser dans 2 x I sous-espaces de mémoire respectifs des mots de données des I canaux de voie aller et I canaux de voie retour des I canaux élémentaires, et

des moyens d'alignement de canaux pour imposer les retards relatifs correcteurs de voie aller et voie retour respectivemment aux canaux de voie aller et voie retour par adressage en écriture et adressage retardé en lecture des mots de données de canal de voie aller et voie retour mémorisés dans les moyens de mémoire, et

en ce que le second terminal comprend

des moyens de commande pour produire des mots de réponse qui sont émis chacun, en réponse à l'un respectif des mots de commande, vers le premier terminal dans un canal de voie retour associé au canal de voie aller libre dans lequel est émis l'un respectif des mots de commande, et

des moyens de bouclage pour reboucler au moins un canal de voie aller sur un canal de voie retour en réponse à au moins des mots de commande prédéterminé.

Selon une autre caractéristique de l'invention, les moyens d'alignement de canaux comprennent, pour aligner I canaux,

une mémoire de retards à 2 x I cases de mémoire respectives pour mémoriser 2 x I mots de retard relatif correcteur entre canaux relatifs aux I canaux de voie aller et aux I canaux de voie retour des I canaux élémentaires respectifs,

un premier compteur binaire incrémenté à quatre fois une fréquence de mot de données pour adresser successivement chacune des 2 x I cases de la mémoire de retards et simultanément respectivement chacun des 2 x I sous-espaces mémoire des moyens de mémoire, alternativement en écriture et lecture,

un second compteur binaire incrémenté à une fréquence de trame pour produire des mots d'adresse d'écriture successifs, et

un additionneur pour additionner l'un des mots de retard relatif correcteur mémorisé dans l'une des 2 x I cases de la mémoire de retards qui est adressée par le premier compteur, à l'un des mots d'adresse d'écriture produit par le second compteur, en un mot d'adresse de lecture des moyens de mémoire, et pour reproduire l'un des mots d'adresse d'écriture lorsque la mémoire de retards est adressée en lecture par le premier compteur respectivement lorsque la mémoire de retards et les moyens de mémoire 13 sont adressés en lecture et en écriture par le premier compteur binaire.

D'autres caractéristiques et avantages de la présente invention apparaîtront plus clairement à la lecture de la description suivante de plusieurs réalisations préférées de l'invention, en référence aux dessins annexés correspondants dans lesquels :

- la figure 1 montre schématiquement un réseau à multiplexage temporel reliant deux terminaux d'usager pour la mise en oeuvre de l'invention;
- la figure 2 est un algorithme pour aligner plusieurs canaux en un hypercanal à débit élevé entre les deux terminaux de la figure 1 selon le procédé de l'invention;
- les figures 3 et 4 sont deux blocs-diagrammes d'un dispositif d'interface esclave et d'un dispositif d'interface maître respectivement connectés aux deux terminaux de la figure 1; et
- la figure 5 est un bloc-diagramme d'un circuit d'alignement de canaux inclus dans le dispositif d'interface maître de la figure 4.

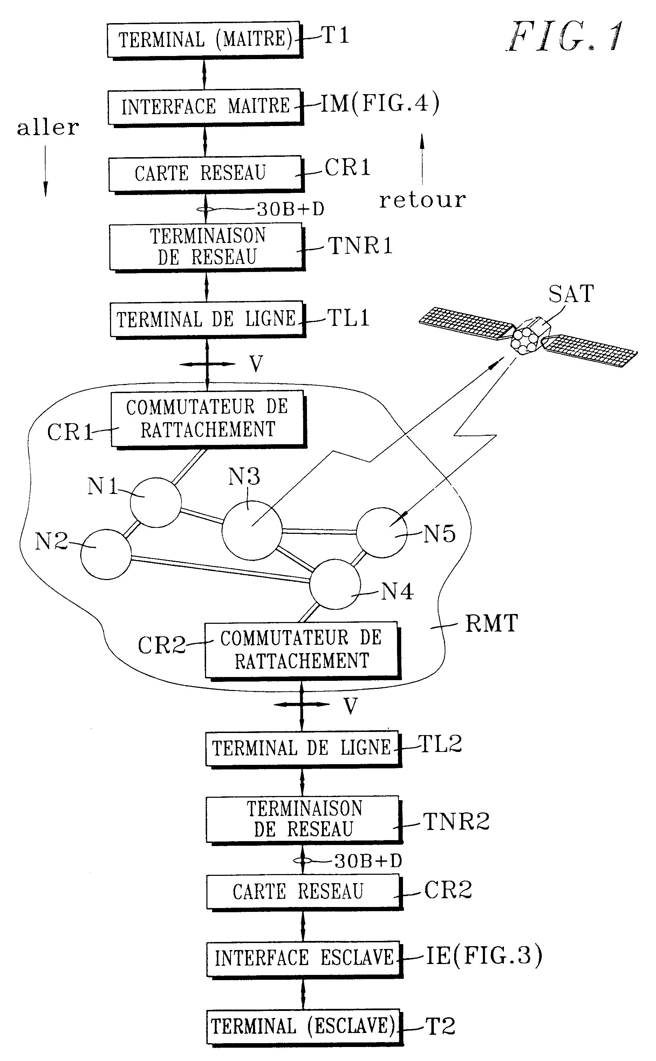

En référence à la figure 1, chacun de deux terminaux d'usager T1 et T2 est connecté à un réseau RNIS à multiplexage temporel RMT à travers une interface IM, IE, une carte réseau CR1, CR2, et des moyens de transmission respectifs comprenant une terminaison de réseau TNR1, TNR2, et un terminal de ligne TL1, TL2. Les deux terminaux de ligne TL1 et TL2 sont reliés à des commutateurs de rattachement respectifs CR1 et CR2 dans le réseau RNIS RMT. Des noeuds de commutation, par exemple au nombre de cinq N1, N2, N3, N4 et N5 par souci de simplification, sont interconnectés entre-eux dans le réseau RMT et définissent une architecture maillée de commutateurs pour l'acheminement des communications entre les deux terminaux T1 et T2 selon des chemins établis par commutation dans ces noeuds. Typiquement une liaison entre deux noeuds est fournie par un faisceau MIC à haut débit. Elle peut néanmoins consister en une liaison par satellite SAT.

La numérisation du réseau étant étendue jusqu'aux terminaux d'usager, dans le cadre du RNIS, une structure de trame à accès primaire à 32 intervalles temporels de type MIC, numérotés 0 à 31, est offerte à l'usager. Il est supposé dans la description qui suit que les deux terminaisons de réseau TNR1 et TNR2 offrent des accès, dits primaires, comprenant 30 canaux B à 64 kbit/s, un canal D de rang 16 à 64 kbit/s et en outre, en pratique, un canal de rang 0 pour la synchronisation le verrouillage de trame et la maintenance/surveillance afin que l'accès primaire offre un débit de 64 x 32 = 2 048 kbit/s. Il sera apprécié par l'homme du métier que tout type d'accès, tel que l'accès de base (2B + D), entre également dans le cadre de l'invention.

Les 30 canaux B sont des canaux indépendants en ce qu'ils sont établis séparément et acheminés à travers le réseau RT selon des chemins a priori distincts. Ces 30 canaux B sont des canaux bidirectionnels occupant 30 intervalles temporels dans des trames de période égale à 125 $\mu s$. A chaque canal bidirectionnel B établi entre les terminaux T1 et T2, sont assignés, d'une part, des intervalles temporels qui ont un rang prédéterminé dans des trames montantes et qui sont occupés par des données produites par le terminal T2 et transmises vers le terminal T1 via le réseau RMT, ce qui constitue un canal de voie aller, et, d'autre part, des intervalles temporels qui ont un rang prédéterminé dans des trames montantes et qui sont occupés par des données produites par le terminal T1 et transmises vers le terminal T2 via le réseau RMT, ce qui constitue un canal de voie retour.

Sachant que les canaux aller et canaux retour qui sont établis entre deux terminaux sont indépendants et acheminés selon des chemins respectifs distincts dans le réseau RMT, il est nécessaire, dans le but de former un canal virtuel à débit élevé, égal à N x 64 kbit/s, d'aligner N canaux, N étant un entier supérieur à 1 et inférieur à 31. Cet alignement est destiné à compenser des retards relatifs entre des durées de transit des N canaux entre les deux terminaux T1 et T2, compte tenu des chemins distincts suivis par ces canaux dans le réseau RMT.

Après alignement, N octets transmis durant N intervalles temporels successifs d'une trame qui est émise par le terminal T1, respectivement T2, vers le réseau RMT, sont reçus par le terminal T2, respectivement T1, suivant l'ordre initial d'émission des octets, indépendamment des acheminements distincts suivis par les canaux dans le réseau RT.

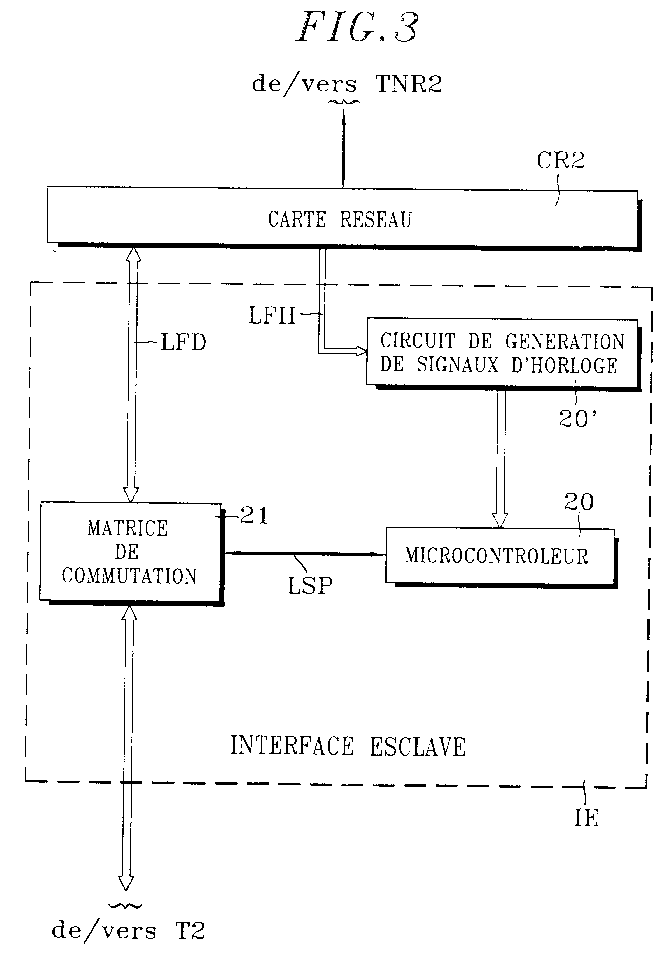

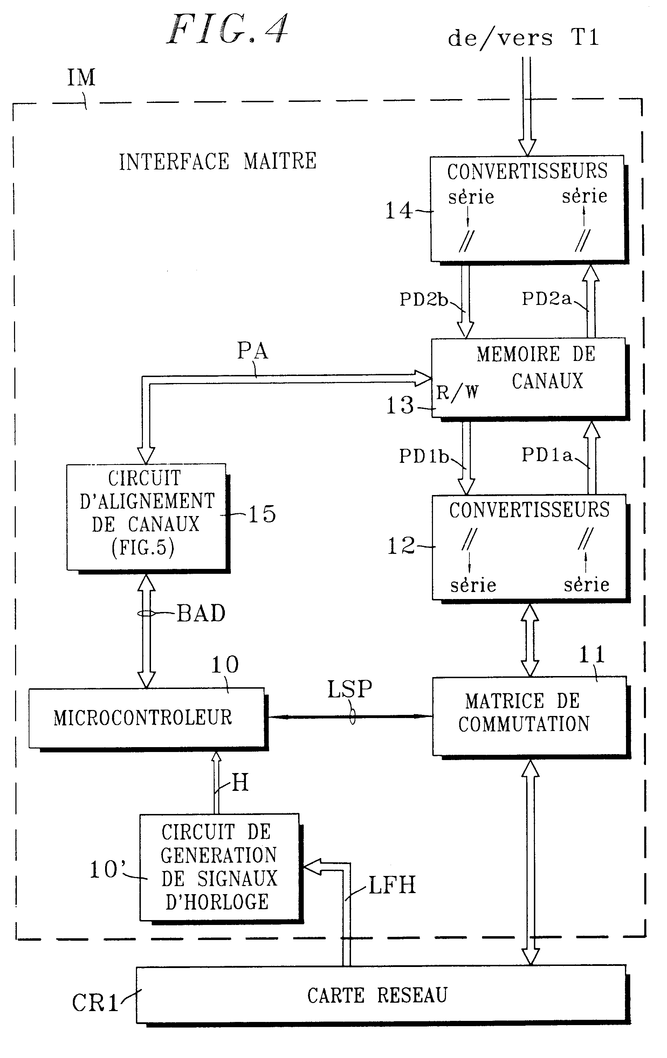

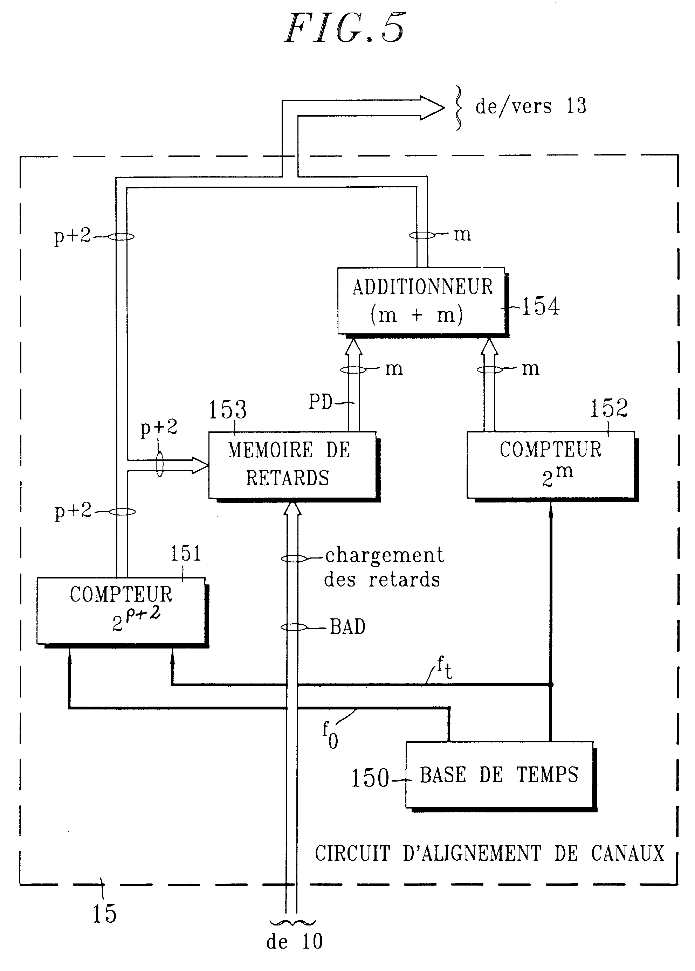

Selon l'invention, l'architecture du système d'alignement de canaux élémentaires entre deux terminaux est de type client-serveur. Cela signifie que pour la formation d'un hypercanal à débit élevé entre deux terminaux, l'un T1 des terminaux, est un terminal "maître" tandis que l'autre T2 des terminaux est un terminal "esclave". Entre le terminal maître T1 et la terminaison de réseau correspondante TNR1 est connectée en série l'interface IM, dite interface maître, et entre le terminal esclave T2 et la terminaison de réseau TNR2, est connectée l'interface IE, dite interface esclave, ces deux interfaces étant détaillées dans les figures 3 et 4.

En pratique, le terminal maître T1 est par exemple un serveur d'images fixes ou animées ou de morceaux de musique, le terminal esclave T2 étant un terminal d'usager ayant accès à une banque d'images/son du serveur.

En reprenant le modèle de référence OSI (Open System Interconnection) établi par l'ISO (International Standardization Organisation), les couches dites "hautes" dans les deux terminaux T1 et T2 et leurs interfaces associées IM et IE relativement à l'interconnexion de ces deux terminaux T1 et T2 ont trait d'une part à l'application à proprement parler de transfert de données à haut débit entre les terminaux T1 et T2, et d'autre part, à l'application d'alignement des canaux entre les terminaux T1 et T2.

Cette application d'alignement des canaux entre les deux terminaux est implantée sous forme logicielle dans les deux terminaux T1 et T2 et leurs interfaces associées IE et IM. Basé sur une architecture de type client-serveur, le dialogue relatif à cette application d'alignement entre terminaux consiste en des mots de commande transmis par le terminal maître T1 vers le terminal esclave T2, et des mots de réponse transmis par le terminal esclave T2 vers le terminal maître T1 en réponse auxdits mots de commande reçus.

Chacun des mots de commande et de réponse est fourni par le terminal concerné T1, T2 à l'interface associée IM, IE sous la forme d'un octet introduit dans un intervalle temporel de trame montante associé à un canal de dialogue prédéterminé, typiquement de rang 0. Chaque mot de commande et de réponse comprend deux champs de données. Un premier champ de données à trois bits est associé à une primitive donnée, au sens défini par le modèle de référence OSI, et un second champ de données à cinq bits est associé à un argument qui peut être par exemple un nombre de canaux en code binaire, inférieur ou égal à 30.

Les mots de commande et de réponse respectivement transmis par les deux terminaux T1 et T2 vers les interfaces respectives associées IM et IE dans le canal de rang O sont retransmis vers le réseau RMT par les interfaces IM et IE dans un canal de dialogue courant, différent du canal de rang 0, qui est établi entre les deux terminaux T1 et T2 et non utilisé pour la transmission de données. Le canal de rang 0 ne peut être utilisé entre les deux terminaux T1 et T2 sachant qu'il est réservé à des fins de synchronisation et surveillance entre cartes réseaux CR1 et CR2. L'établissement de canaux entre les deux terminaux T1 et T2 préalablement à toute procédure relative à l'alignement de ces canaux est mis en oeuvre par les deux cartes réseau CR1 et CR2 en interaction directe avec ces deux terminaux respectifs. Les deux cartes réseau peuvent être constitutives par exemple d'autocommutateurs numériques d'accès primaire installés chez les deux usagers des terminaux T1 et T2.

Ainsi, les cartes réseau CR1 et CR2 sont garantes de l'établissement de canaux entre les deux terminaux T1 et T2 sous la commande de ces derniers, et les interfaces maître et esclave IM et IE assurent l'alignement de ces canaux établis toujours sous la commande des deux terminaux.

Les mots de commande et de réponse transmis respectivement du terminal maître T1 vers le terminal esclave T2 et du terminal esclave T2 vers le terminal maître T1 sont maintenant présentés. Chacun de ces mots de commande et de réponse est un octet dont trois premiers bits composent une primitive X et dont les cinq derniers bits composent un argument Y, s'écrivant sous la forme X(Y), transmis dans un canal de dialogue.

Un argument est par convention toujours relatif sauf dans deux cas exceptionnels précisés ci-après, au terminal distant, c'est-à-dire au terminal T1 recevant un mot de réponse ou T2 recevant un mot de commande.

D'autre part, le canal de rang 31, c'est-à-dire le canal relatif au dernier octet de trame, n'est jamais utilisé directement par l'un des terminaux T1 ou T2. En effet, entre les deux cartes réseau CR1 et CR2, au sein du réseau RNIS à multiplexage temporel, les octets, ou intervalles temporels de trame de rang 0 et 16 sont respectivement attribués à la maintenance/surveillance des canaux et à la signalisation (canal D) entre usagers. Or l'apparition périodique de cet intervalle temporel de rang 16 en milieu de trame dans chaque trame successive n'est pas souhaitable pour des raisons de synchronisation en transmission/réception de données dans les canaux B établis. Il est en effet préférable que cette synchronisation dans les terminaux T1 et T2 soit opérée dans des canaux B contigus successifs.

Pour cela l'échange de données, dans les deux sens, entre terminal T1, T2 et interface associée IM, IE, consiste en la transmission des mots de commande et réponse dans le canal de rang O, et la transmission des données utiles, telles que données d'image, dans les canaux successifs de rang 1 à 30. Par contre l'échange de données, dans les deux sens, entre interface IM et IE et carte réseau CR1 et CR2 consiste en la transmission desdits mots de commande dans un canal de dialogue courant, et la transmission des données d'image utiles dans les canaux pris entre les rangs 1 à 15 et 17 à 31. Ainsi les interfaces maître IM et esclave IE "permutent" deux canaux émis et reçu afin, d'une part, que chaque mot de commande reçu du terminal T2, ou mot de réponse reçu du terminal T1 via le canal 0 soit retransmis à travers le réseau RMT dans le canal de dialogue courant et inversement, et, d'autre part, que les données utiles émises par le terminal T1 dans les canaux de rang 1 à 30, soient retransmises à travers le réseau RMT via les canaux 1 à 15 et 17 à 31 et inversement. En pratique, cette dernière permutation consiste en la translation par les interfaces IE et IM des canaux 17 à 31 en les canaux 16 à 30, et inversement en réception.

Les primitives des mots de commande émis par le terminal maître T1 sont les suivantes :

SELECTION, RESERVATION, LIBERATION, CONNEXION et DECONNEXION,

et l'unique primitive des mots de réponse transmis par le terminal esclave T2 est :

ACQUITTEMENT

Ces primitives, au nombre de six, sont codées sur 3 bits ($2^3 = 8$).

Les cinq bits restants d'un octet de canal utilisés pour la transmission de l'argument associé à la primitive autorisent $2^5 = 32$ arguments différents.

Afin de limiter à un octet la taille d'un mot de commande et de réponse transmis, et sachant que les canaux de rang 0 et 31, vus des terminaux T1 et T2, ne sont pas utilisés pour la transmission de données utiles entre terminaux T1, T2, et interface IM, IE, et donc que les arguments correspondants 0 et 31 ne sont pas utilisés en combinaison avec l'une des primitives prédéfinies relatives à l'application d'alignement de canaux, la combinaison de l'une de ces primitives avec l'un des arguments 0 ou 31 est utilisée pour définir des mots de commande ou de réponse généraux définis ci-après.

Dans la suite, il est supposé que chaque mot de commande transmis par le terminal maître T1 est associé à une commande qui peut être satisfaite par le terminal esclave T2. En pratique cela n'est pas le cas, et le terminal esclave répond alors par le mot de réponse : ACQUITTEMENT (0).

## 1) MOTS DE COMMANDE/REPONSE GENERAUX

1a) Le mot de commande :

SELECTION (O)

utilisant l'argument 0 est transmis par le terminal maître T1 vers le terminal esclave T2 pour positionner le terminal esclave T2 en **mode "canal"**. Le terminal esclave T2 répond par un mot de réponse sous la forme :

ACQUITTEMENT (nombre de canaux disponibles)

dont l'argument sert à indiquer le nombre de canaux disponibles.

1b) De même qu'il existe un mode "canal", il est défini un **mode "hypercanal et configuration"**. Plusieurs

EP 0 631 404 A1

hypercanaux constitués chacun de plusieurs canaux élémentaires à 64 kbit/s alignés peuvent coexister à l'accès primaire. Une association logique de plusieurs hypercanaux, telle que deux hypercanaux associés respectivement à des largeurs de bande adéquates pour la transmission simultanée d'images animées et de son, est appelée "configuration".

Le positionnement en mode "hypercanal et configuration" du terminal esclave T2 par le terminal maître T1 est obtenu par la transmission du mot de commande :

SELECTION (31) par le terminal maître T1 vers le terminal esclave T2,
auquel le terminal esclave répond par le mot de réponse :
ACQUITTEMENT (numéros de configuration et d'hypercanal courants).

L'argument "numéros de configuration et d'hypercanal courants" désigne un numéro de configuration et, au sein de cette configuration, un numéro d'hypercanal sur lesquels le terminal esclave est positionné (positionnement logiciel).

En pratique, sachant que seulement cinq octets sont attribués à l'argument, le nombre d'hypercanaux dans une configuration et le nombre de configurations possibles sont limités à $2^3 = 8$ et $2^2 = 4$ respectivement. L'un des 8 hypercanaux, dit hypercanal auxiliaire, est utilisé, comme détaillé ultérieurement, lors d'un incident de rupture de canaux dans un hypercanal original, afin de réaligner séparément les canaux rompus dans l'hypercanal auxiliaire préalablement à une fusion de cet hypercanal auxiliaire et de l'hypercanal original.

1c) Le mot de commande :

RESERVATION (O),
transmis par le terminal maître T1, suivi du mot de réponse :
ACQUITTEMENT (nombre de canaux établis non réservés)
de la part du terminal esclave T2, positionne en mode "canal" le terminal esclave T2 qui, en réponse, renseigne le terminal maître T1 sur le nombre de canaux établis non encore réservés dans le terminal esclave T2.

Le terminal maître T1 transmet un tel mot de commande dans le but de connaître le nombre de canaux disponibles non encore réservés, et cela généralement préalablement à une commande d'enregistrement de canaux isolés (cf. 2a) ou une commande de réservation d'un canal à ajouter à l'hypercanal courant (cf. 2.) Cette information de nombre de canaux établis non réservés n'est pas connue du terminal maître T1, sachant que le terminal esclave T2 peut affecter certains de ces canaux à d'autres communications que celles établies avec T1.

1d) De manière parallèle, le mot de commande :

RESERVATION (31)
suivi du mot de réponse :
ACQUITTEMENT (nombres de configurations et d'hypercanaux disponibles)
renseigne le terminal maître T1 sur les nombres restant de configurations et d'hypercanaux libres, dans les limites respectives de 4 et 7 en dépendance de la taille des 5 bits de l'argument, dans le terminal esclave et précède généralement une commande d'enregistrement de canaux (cf. 2a).

Ces informations de "nombres de configurations et d'hypercanaux disponibles" ne sont pas connues a priori du terminal maître T1, sachant que le terminal esclave T2 peut établir des hypercanaux avec des terminaux autres que le terminal maître T1.

A ces mots de commande/réponse généraux permettant au terminal maître T1 d'obtenir des informations concernant les canaux, hypercanaux et configurations disponibles, établis ou existants au niveau du terminal esclave, s'ajoutent des mots de commande/réponse, dits actifs, en ce qu'ils modifient les configurations existantes du terminal maître T1 ou/et terminal esclave T2.

2) MOTS DE COMMANDE/REPONSE ACTIFS

2a) Enregistrement d'un canal ou d'une configuration/hypercanal par le terminal maître T1

Sachant que chaque canal établi entre terminal maître T1 et terminal esclave T2 est associé à des rangs, ou numéros, de canal dans ces deux terminaux a priori non identiques, il est nécessaire que le terminal maître T1 et le terminal esclave T2 connaissent tous deux la correspondance existante entre les rangs des canaux respectifs établis entre eux, afin qu'ils aient un dialogue commun.

Pour cela, le terminal maître T1 transmet le mot de commande :

SELECTION (n° de canal local)
dans ledit canal local, et auquel mot de commande le terminal esclave T2 répond par le mot de réponse :
ACQUITTEMENT (n° de canal distant)

7

Il apparait clairement que différents enregistrements doivent être réalisés respectivement relativement à différents terminaux esclaves en communication avec le terminal maître T1 puisque des canaux respectifs établis avec ces différents terminaux esclaves peuvent avoir des rangs identiques.

L'argument "n° de canal distant" transmis par le terminal esclave T2 correspond au rang ou numéro de canal dans lequel a été reçu le mot de commande (SELECTION (n° de canal local)) par le terminal esclave T2. Il est rappelé que ces arguments "n° de canal local" et "n° de canal distant" ne correspondent pas systématiquement aux rangs des canaux au sein du réseau RMT compte tenu de la translation de canal opéré par les interfaces IM et IE, mais au rangs au niveau des terminaux. Selon ce principe, les arguments "n° de canal local" et "n° de canal distant" ne prennent jamais les valeurs 0 et 31 utilisées pour les mots de commande généraux introduits précédemment.

## 2b) Sélection d'un canal courant parmi les canaux enregistrés

Pour la sélection d'un canal courant comme canal de travail, le terminal maître T1 transmet le mot de commande :

SELECTION (n° de canal distant)

dans un canal actif quelconque. Ceci a pour effet, dans le terminal esclave, ou distant, T2 de réactiver si nécessaire le canal distant associé à l'argument "n° de canal distant", et le terminal esclave T2 transmet en réponse le mot de réponse :

ACQUITTEMENT (n° de canal local)

La réactivation de ce canal distant déjà établi est nécessaire lorsque la terminaison numérique de réseau TNR2 détecte éventuellement une absence de signal dans ce canal pendant une durée relativement longue, et en conséquence lors d'une "mise en veille" de ce canal.

## 2c) Réservation des ressources nécessaires aux deux extrémités

Le terminal maître T1, préalablement à la formation d'une configuration d'hypercanaux à débits élevés, peut demander au terminal esclave T2 une réservation d'une certaine configuration proche de celle requise par le mot de commande :

RESERVATION (n° configuration locale, nombre d'hypercanaux locaux) auquel le terminal esclave T2 répond par le mot de réponse :

ACQUITTEMENT (n° configuration distante, nombre d'hypercanaux distants accordés).

Le terminal maître T1 réserve ainsi une certaine configuration dans le terminal distant T2, cette configuration étant définie par un certain nombre d'hypercanaux.

Pour chacun de ces hypercanaux, le terminal maître T1 va réserver dans le terminal esclave T2 un certain nombre de canaux. La procédure est la suivante. Tour à tour, le terminal maître T1 sélectionne chacun des hypercanaux par un mot de commande :

SELECTION (n° configuration distante, rang d'hypercanal )

auquel répond le terminal esclave T2 par :

ACQUITTEMENT (n° configuration locale, rang d'hypercanal ),

puis réserve pour ledit chacun des hypercanaux un certain nombre de canaux par un mot de commande :

RESERVATION (nombre de canaux)

auquel le terminal esclave s'acquitte par :

ACQUITTEMENT (nombre de canaux accordés)

Cette boucle de SELECTION-RESERVATION est répétée autant de fois qu'il y a d'hypercanaux dans la configuration réservée.

## 2d) Libération des ressources aux deux extrémités

Après avoir réservé des ressources dans le terminal esclave T2 selon la procédure décrite dans le paragraphe précédent 2c), et utilisé ces ressources pour transmettre des données dans les hypercanaux, le terminal maître T1 libère ces ressources réservées, comme décrit ci-dessous.

Dans un objectif de réduction des ressources, le terminal maître T1 décide de libérer soit un hypercanal au sein d'une configuration, soit un canal au sein d'un hypercanal. En fonction de la décision retenue, le terminal maître T1 positionne préalablement le terminal esclave T2 dans le mode "hypercanal" ou "canal" correspondant afin de préciser à ce terminal esclave l'interprétation à donner au prochain mot de commande.

Pour cela, comme décrit dans les paragraphes la) et 1b), le terminal maître T1 positionne le terminal esclave T2 en mode "hypercanal" ou "canal" en transmettant préalablement le mot de commande SELECTION (31) ou SELECTION (0), respectivement, afin que l'argument de la primitive LIBERATION prochaine à transmettre soit interprété correctement par le terminal esclave T2. Puis ces mots de commande SELECTION (31) et SELECTION (0) sont respectivement suivis des mots de commande :

LIBERATION (n° de configuration distante, rang d'hypercanal, et

LIBERATION (n° de canal distant)

auxquels le terminal esclave répond respectivement par :

ACQUITTEMENT (n° configuration locale, rang d'hypercanal), et

ACQUITTEMENT (n° de canal local).

Ces deux derniers mots de réponse signifient au terminal maître T1 une libération effective d'un hypercanal et d'un canal respectivement.

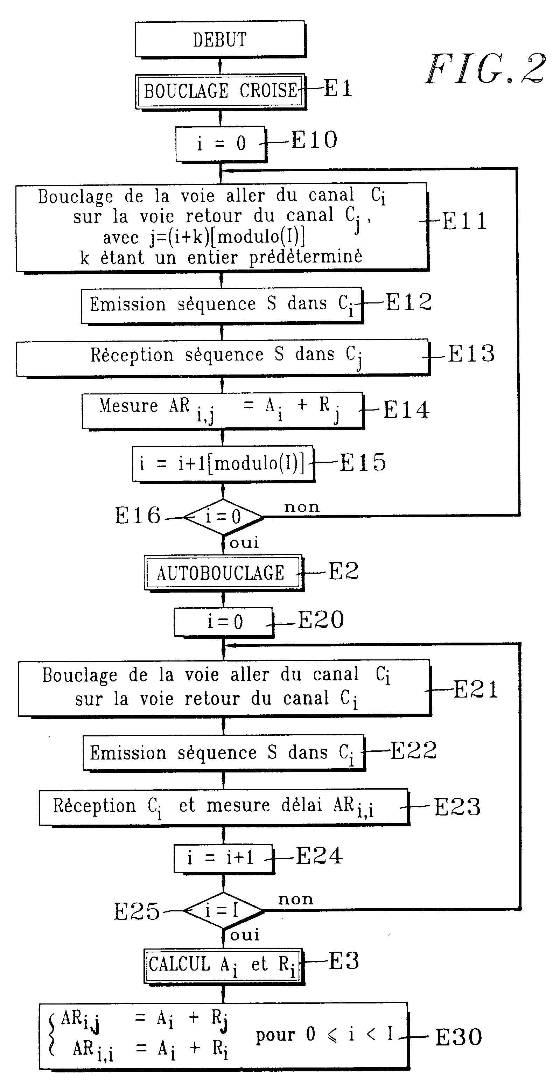

Après avoir défini les primitives et arguments relatifs à la gestion des canaux à aligner entre terminal maître et terminal esclave, il est maintenant présenté, en référence à la figure 2, le procédé d'alignement des canaux selon l'invention. Il est à noter que la liste des primitives et arguments définie ci-dessus n'est pas exhaustive et l'homme du métier appréciera que celle-ci peut être modifiée et complétée. De même le choix d'un octet pour la transmission de ces primitives et arguments en des mots de commande et de réponse n'est pas limitatif. En définissant un jeu de primitives plus complet, ou en choisissant d'élargir les nombres possibles d'hypercanaux et configurations, limités à 8 et 4 ici en dépendance des cinq bits utilisés par un argument dans un mot de commande et de réponse, il est envisageable d'étendre à deux octets successifs d'un même canal la taille d'un mot de commande ou de réponse.

Cet alignement des canaux est opéré après que le terminal maître T1 ait réservé dans le terminal esclave T2 une configuration contenant un certain nombre d'hypercanaux, et pour chacun de ces hypercanaux, un certain nombre de canaux, comme défini au paragraphe 2c).

L'algorithme de la figure 2 est relatif uniquement à l'alignement des canaux d'un hypercanal réservé donné. En pratique, cet alignement est réalisé pour chacun des hypercanaux d'une configuration. Dans la suite, il est supposé que l'hypercanal réservé donné, pour lequel des canaux sont à aligner, contient un groupe de I canaux $C_O$ à $C_{I-1}$, I étant un entier supérieur à 1 et typiquement inférieur ou égal à 30. Ces I canaux ne correspondent pas nécessairement à des intervalles temporels successifs d'une trame montante émise par le terminal maître T1 ou d'une trame montante émise par le terminal T2.

Le procédé d'alignement selon l'invention comprend, pour chacun des canaux constitutifs de l'hypercanal, deux étapes principales qui sont une étape de mesure de délai aller-retour en bouclage croisé et une étape de mesure de délai aller-retour en autobouclage. Bien que l'algorithme de la figure 2 prévoit préalablement une première étape E1 pour mesurer des délais aller-retour en bouclage croisé respectivement pour tous les canaux de l'hypercanal, puis une seconde étape E2 pour mesurer des délais aller-retour en autobouclage respectivement pour tous ces canaux, ces deux étapes peuvent être interchangées, ou de mesures de délai aller-retour en bouclage croisé puis en autobouclage peuvent être effectuées successivement pour chacun des canaux à aligner.

Contrairement à l'hypothèse selon le brevet américain US-A-4 577 312, le procédé d'alignement selon l'invention considère les impératifs réels de transmission en ce que le délai de transit aller, du terminal maître T1 vers le terminal esclave T2, de données transmises dans un canal de voie aller d'un canal bidirectionnel établi dans le sens T1 vers T2 n'est pas égal au délai de transit retour de données transmises dans un canal de voie retour de ce même canal bidirectionnel dans le sens T2 vers T1. Ceci signifie que la durée de transit aller ou retour de données entre terminal maître T1 et terminal esclave T2 n'est pas égale à la demi-somme des délai de transit aller et délai de transit retour.

Lors de l'étape en bouclage croisé E1, le terminal maître T1 sélectionne (étape E10) le premier canal $C_O$ des I canaux $C_O$ à $C_{I-1}$ à aligner. Le terminal maître T1 possède, grâce à la procédure d'enregistrement décrite au paragraphe 2a), une "table" de correspondance entre rang de canal dans le terminal maître T1 et rang correspondant de canal dans le terminal esclave T2 pour chacun des canaux établis entre terminal maître T1 et terminal esclave T2.

Le terminal maître T1 demande la connexion par rebouclage à travers le terminal esclave T2, de la voie aller (trame montante vue de T1) du canal $C_O$ sélectionné sur la voie retour (trame descendante vue de T1) du canal $C_1$ (Etape E11). Pour cela, il transmet le mot de commande :

CONNEXION (n° de canal distant)

dans un intervalle temporel de trame correspondant au canal de voie aller du canal bidirectionnel $C_O$.

L'argument "n° de canal distant" dénote le rang du canal $C_1$ vu du terminal esclave T2. Il est rappelé qu'un canal établi entre terminal maître T1 et terminal esclave T2 ne possède pas a priori les mêmes rangs de canal respectivement au niveau de ces deux terminaux T1 et T2.

En réponse à la transmission du mot de commande précité CONNEXION, le terminal esclave répond par le mot de réponse :

ACQUITTEMENT (n° de canal local)

qui est transmis dans la voie retour, vu du terminal maître, du canal $C_1$ et reçu par le terminal maître T1.

En réponse à ce mot d'acquittement émis par le terminal esclave T2 et reçu dans le canal de voie retour du canal bidirectionnel $C_1$ par le terminal maître T1, ce dernier émet une séquence S d'octets successifs respectivement dans des intervalles temporels de trame successifs du canal de voie aller du canal $C_O$, vers le terminal esclave T2 (étape E12).

De préférence cette séquence d'octets est mémorisée dans une table et est générée par codage polynominal au moyen d'un polynôme primitif P de degré 8, du type

$$P(x) = x^8 + x^4 + x^3 + x^2 + 1$$

La séquence S est constituée d'octets successifs correspondant respectivement aux valeurs 1,....., et $2^8$ = 255 qui sont codées par le polynôme P. P est bien entendu une bijection pour éviter toute redondance dans la séquence d'octets transmis, et donc des erreurs de mesure de délai.

Cette séquence d'octets ventilés dans des intervalles temporels respectifs successifs de trame du canal de voie aller du canal $C_O$ par le terminal maître T1 sera rebouclée dans le terminal T2 et reçue dans le terminal T1, via le canal de voie retour du canal $C_1$ avec un certain délai $AR_{0,1}$ (étape E13).

Ce délai est égal à la somme du délai de transit aller, noté $A_O$, dans le canal de voie aller du canal $C_O$ et du délai de transit retour, noté $R_1$, dans le canal de voie retour du canal $C_1$. Cette somme s'écrit :

$$AR_{0,1} = A_O + R_1$$

Le délai de transit aller-retour $AR_{0,1}$ est mesuré (étape E14) par le terminal maître en comparant, dans ladite table, les rangs de deux octets de séquence identiques qui sont respectivement émis et reçu, ces deux rangs étant comptés par rapport à une même référence, par exemple le premier octet de séquence émis par le terminal T1. Il suffit alors de multiplier la différence de ces rangs par le "pas temporel" des rangs égal à la période de trame, soit 125 $\mu s$, pour obtenir $AR_{0,1}$.

En pratique, la concordance entre un octet de séquence émis dans le canal de voie aller du canal $C_O$ et un octet reçu dans le canal de voie retour du canal $C_1$ est effective lorsqu'une correspondance d'octets émis et reçu est vérifiée pour un nombre suffisant d'octets successifs, par exemple 6.

Comme schématisé par les étapes E15 et E16 et le "rebouclage" sur l'étape E11 dans l'algorithme de la figure 2, des ensembles d'étapes E11 à E16 analogues à celles décrites précédemment pour la mesure d'un délai aller-retour $AR_{0,1}$ relatif aux canaux $C_O$ et $C_1$ par "bouclage croisé" sont effectués pour tous les couples de canaux $(C_i, Cj)$ avec $j = i + k$ (module I), k étant un entier prédéterminé compris entre 1 et 255. Cet entier k est choisi égal à 1 dans la suite de la description. Ceci se traduit dans le terminal maître T1, par les mesures des délais de transit aller-retour croisé suivants (étape E30 ultérieure) :

$$AR_{0,1} = A_0 + R_1;$$
$$AR_{1,2} = A_1 + R_2; ...$$
$$AR_{i,i+1} = A_i + R_{i+1}; ..$$
$$AR_{I-2,I-1} = A_{I-2} + R_{I-1};$$

et

$$AR_{I-1,0} = A_{I-1} + R_0$$

où $A_i$ désigne le délai de transit aller, de T1 vers T2, dans le canal de voie aller du canal $C_i$,

$R_{i+1}$ désigne le délai de transit retour, de T2 vers T1, dans le canal de voie retour du canal $C_{i+1}$, et

$AR_{i,i+1}$ désigne le délai de transit aller-retour mesuré, de T1 vers T2 puis T2 vers T1, respectivement dans les canaux de voies aller et retour des canaux $C_i$ et $C_{i+1}$.

Au cours d'une seconde étape E2, dite d'autobouclage, des délais de transit aller-retour entre terminal maître T1 et terminal esclave T2 pour un même canal $C_i$ sont mesurés. Les délais de transit aller retour sont alors $AR_{0,0}$ $AR_{1,1}$...., $AR_{i,i}$....$AR_{I-1,I-1}$, les entiers i et j étant pris égaux pour les couples de canaux $(Ci, Cj)$.

Pour cela, le terminal maître T1 commande dans le terminal esclave T2 le rebouclage du canal $C_O$ sur lui-même, ce qui correspond au bouclage du canal de voie aller sur le canal de voie retour associé du canal $C_O$ (étape E21), par transmission du mot de commande :

CONNEXION (n° canal distant)

qui est transmis du terminal T1 vers le terminal T2 dans le canal de voie aller du canal $C_O$. L'argument "n° de canal distant" de ce mot de commande correspond au rang du canal $C_O$ "vu" du terminal esclave T2.

A ce mot de commande, le terminal esclave T2 répond par un mot de réponse sous la forme :

ACQUITTEMENT (n° de canal local),

transmis dans le canal de voie retour de ce même canal $C_O$.

Ce mot ACQUITTEMENT invite le terminal maître T1 à émettre une séquence d'octets S telle que définie à l'étape E12. Ainsi à l'étape suivante E22, le terminal maître T1 émet les octets de la séquence S dans des intervalles temporels de trame successifs respectifs de la voie aller du canal $C_O$.

Ces octets de séquence émis par le terminal maître T1 sont reçus par ce même terminal maître T1 grâce au bouclage du canal $C_O$ à travers le terminal esclave T2, à l'expiration d'un délai de transit aller-retour $AR_{0,0}$ des octets de séquence dans le canal $C_O$. Le terminal maître T1 mesure ce délai $AR_{0,0}$ (étape E23), comme décrit à l'étape E14, par comparaison des rangs respectifs des octets de séquence émis et reçus.

Itérativement (étapes E24 et E25), le terminal maître T1 mesure tous les délais de transit aller-retour $AR_{i,i}$ pour tous les canaux $C_i$ de l'hypercanal à former. Pour un canal donné $C_i$, un délai de transit aller-retour $AR_{i,i}$ est égal à la somme du délai de transit aller $A_i$ du terminal T1 vers le terminal T2, dans un canal de voie aller du canal $C_i$ et du délai de transit retour $R_i$, du terminal T2 vers le terminal T1, dans un canal de voie retour de ce même canal $C_i$.

Le terminal maître mesure ainsi les délais de transit aller-retour suivants :

$$AR_{0,0} = A_0 + R_O;$$
$$AR_{1,1} = A_1 + R_1;...$$
$$AR_{i,i} = A_i + R_i;.....$$
$$AR_{I-1,I-1} = A_{I-1} + R_{I-1}.$$

où $A_i$ désigne le délai de transit aller, de T1 vers T2, dans le canal de voie aller du canal $C_i$,

$R_i$ désigne le délai de transit retour, de T2 vers T1, dans le canal de voie retour du canal $C_i$, et

$AR_{i,i}$ désigne le délai de transit aller-retour mesuré du canal $C_i$.

Les retards relatifs entre canaux (étape E3) sont calculés en combinant (étape E30) les résultats des mesures effectuées en bouclage croisé (étape E1) et en autobouclage (étape E2) par le terminal maître T1, résultats qui peuvent être résumés par les équations suivantes :

| | |
|---|---|
| $AR_{0,1} = A_0 + R_1,$ | $AR_{0,o} = A_O + R_O$ |
| $AR_{1,2} + A_1 + R_2$ | $AR_{1,1} = A_1 + R_1, \_$ |
| $AR_{2,3} = A_2 + R_3$ | $AR_{2,2} = A_2 + R_2,$ |
| $AR_{i,i+1} = A_i + R_{i+1}$ | $AR_{i,i} = A_i + R_i$ |
| $AR_{I-2,I-1} = A_{I-2} + R_{I-1},$ | $AR_{I-2,I-2} = A_{I-2} + R_{I-2},$ |
| $AR_{I-1,0} = A_{I-1} + R_0,$ | $AR_{I-1,I-1} = A_{I-1} + R_{I-1}$ |

Ces deux groupes d'équations forment un système linéaire simple aisément soluble, toutes les inconnues $A_i$, $O \leq i \leq I-1$, et $R_i$, $O \leq i \leq I-1$, pouvant être exprimées en fonction de l'une d'elles.

Sachant que seules les valeurs des retards relatifs entre canaux sont recherchées, et non pas les délais réels de transit aller et retour pour chaque canal $C_i$, ce choix arbitraire d'une des variables est cohérent avec le but recherché.

Ainsi, en choisissant arbitrairement par exemple $A_o = AR_{0,0}/2$, sont obtenus tous les retards "relatifs" de transit aller, égaux à $A_i$, entre canaux de voie aller, ainsi que tous les retards "relatifs" de transit retour égaux à $R_i$ entre canaux de voie retour pour les canaux $C_i$ de l'hypercanal à former, avec $o \leq i \leq I-1$.

En fonction des retards relatifs de transit aller $A_i$ et retour $R_i$, sont déduits un retard relatif correcteur précompensateur en transit aller $a_i$ et un retard relatif correcteur post-compensateur en transit retour égaux à $r_i$

à imposer à chaque canal $C_i$. Ces retards relatifs correcteurs sont les suivants :

}

$$a_i = \max\{A_i; 0 \leq i \leq I - 1\} - A_i,$$

et

$$r_i = \max\{R_i; 0 \leq i \leq I - 1\} - R_i,$$

où max est l'opérateur maximum.

Bien évidemment, pour un canal de voie aller et un canal de voie retour ayant respectivement un délai de transit aller $A_i$ et retour $R_i$ qui est maximal, aucun retard relatif ne lui sera imposé. Ces retards relatifs $a_i$ et $r_i$ sont imposés aux canaux $C_i$ par l'interface maître IM (figure 1).

Les interfaces esclave IE et maître IM sont maintenant décrites en référence aux figures 3 et 4.

En référence à la figure 3, l'**interface esclave** IE est organisée autour d'un microcontrôleur 20 et comprend un circuit de génération de signaux d'horloge 20', et une matrice de commutation 21.

Cette interface esclave IE est couplée, d'une part, avec la carte réseau CR2 qui fournit des liens fonctionnels de données LFD, et des liens fonctionnels d'horloge à fréquences trame et bit LFH, et, d'autre part, avec le terminal esclave T2. Il est rappelé que le dialogue local entre terminal esclave T2 et interface esclave IE, s'effectue dans le canal de rang 0. Chaque mot de réponse émis par le terminal esclave T2 dans le canal de rang 0, est réemis vers la carte réseau CR2 par l'interface IE dans un canal courant. Inversement chaque mot de commande reçu dans un canal actif quelconque de la carte réseau CR2 est réémis dans le canal de rang 0 vers le terminal esclave T2. Le canal actif courant dans lequel est émis un mot de réponse correspond au canal dans lequel a été reçu un dernier mot de commande.

Les signaux d'horloge de synchronisation relatifs aux liens fonctionnels d'horloge LFH fournis par la carte réseau CR2 sont appliqués à des entrées du circuit de génération de signaux d'horloge 20' qui, en réponse, produit divers signaux de synchronisation trame, octet et bit appliqués à des entrées d'horloge du microcontrôleur 20.

L'interface esclave IE présente les trois fonctions principales suivantes :

a) dans le sens réseau RMT vers terminal T2, translation des canaux multiplexés entrants, de rangs 17 à 31 en des canaux de rangs 16 à 30, et inversement dans le sens terminal T2 vers réseau RT, translation des canaux multiplexés sortants, de rangs 16 à 30 en des canaux de rangs 17 à 31. En effet comme cela a été souligné en début de description, le canal de rang 16 est réservé au sein du réseau RMT à la signalisation, et il apparaît plus judicieux de fournir à l'application du terminal T2 des données transmises dans des canaux consécutifs, non séparés par le canal de rang 16 inutile à la transmission des données;

b) regroupement et réordonnancement des canaux alignés d'un hypercanal donné reçu du réseau RMT en des canaux successifs. En effet, un hypercanal résulte de l'alignement de plusieurs canaux pris isolément et non nécessairement successifs dans une trame. Pour une utilisation plus aisée des données d'un hypercanal, il est préférable que ces canaux isolés et non successifs dans le réseau RT, soient regroupés et réordonnés en des canaux successifs lorsqu'ils sont reçus par le terminal T2;

c) regroupement et réordonnencement, selon l'ordre distant dans le terminal T1, des canaux de l'hypercanal à transmettre le terminal T1; et

d) rebouclage d'une voie aller d'un canal donné sur une voie retour de ce même canal ou d'un autre canal.

La matrice 21 transmet à travers et reçoit de la carte réseau CR2 respectivement des voies multiplex sortante et entrante, et transmet vers et reçoit du terminal T2 respectivement des voies multiplex entrante et sortante. Cette matrice de commutation 21 est commandée par le microcontrôleur à travers une liaison série ou parallèle LSP pour opérer des commutations d'intervalles temporels afin de mettre en oeuvre les fonctions a) b) et c) définies ci-dessus.

En référence à la figure 4, l'**interface maître** IM présente une architecture matérielle plus complexe que l'interface esclave IE, puisse qu'elle a en charge l'affectation des retards relatifs entre canaux de chaque hypercanal dans les voies aller et retour.

L'interface maître IM est également organisée autour d'un microcontrôleur 10 et comprend un circuit de génération de signaux d'horloge 10', une matrice de commutation 11, des convertisseurs série-parallèle et parallèle-série 12, une mémoire de canaux 13, des convertisseurs parallèle-série et série-parallèle 14 et un circuit d'alignement de canaux 15.

La carte réseau CR1, d'une part, est reliée à une voie multiplex entrante dans la matrice de commutation 11 et, d'autre part, à une voie multiplex sortante de cette même matrice de commutation 11. La matrice de commutation 11, commandée par le microcontrôleur à travers une liaison série ou parallèle LSP, assure les fonctions de translation de canaux et de réordonnancement décrites précédemment dans les paragraphes a) et b) relatifs à l'interface esclave IE. Le microcontrôleur 10 est synchronisé sur les trames descendantes et montantes respectivement dans les voies multiplex entrante et sortante, par des signaux d'horloge H établis par le circuit de génération 10' à partir de liens fonctionnels d'horloge LFH fournis par la carte réseau CR1.

Le dialogue local entre le microcontrôleur 10 et le terminal T1 est transporté soit par le canal de rang O dans les voies multiplex entrante et sortante, soit par une interface parallèle supplémentaire.

Les retards relatifs aux voies aller et retour entre chacun des canaux et les autres canaux dans un même hypercanal sont appliqués à chacun des intervalles temporels de voie aller et retour dudit chacun des canaux au moyen de la mémoire de canaux 13 et du circuit d'alignement de canaux 15. Par des opérations d'écriture et de lecture retardée d'intervalles temporels de 8 bits dans la mémoire 13, les voies aller et retour respectives de chaque canal sont retardées de manière appropriée en dépendance des retards relatifs calculés selon le procédé de l'invention, afin d'aligner les canaux d'un même hypercanal.

L'accès à une telle mémoire de canaux 13 nécessite la conversion série-parallèle des trames périodiques à 32 octets en série fournies par la voie multiplexée entrante de voie retour issue de la carte réseau CR1, en des octets parallèles appliqués en écriture à un premier port de données de voie retour PD1a de la mémoire 13.

Inversement, en lecture à un second port de données de voie retour PD2a de la mémoire 13, les octets de la voie multiplex entrante de voie retour sont produits en parallèle. Une conversion parallèle-série de ces octets parallèles est alors effectuée afin de fournir les canaux dans une voie multiplex en série au terminal maître T1.

Ce qui vient d'être décrit concernant les conversions série-parallèle puis parallèle-série opérées dans la voie multiplex entrante de voie retour, est également mis en oeuvre dans la voie multiplex sortante de voie aller pour les données transmises du terminal maître T1 vers le terminal esclave T2, en utilisant des premier et second ports de données de voie aller PD2b et PD1b de la mémoire 13.

Ainsi les convertisseurs série-parallèle et parallèle-série 12 opèrent sur les voies multiplex entrante et sortante, et les convertisseurs parallèle-série et série-parallèle 14 opèrent respectivement sur les voies multiplex entrante et sortante. Ces convertisseurs 12 et 14 sont disposés de part et d'autre de la mémoire 13 et connectés respectivement aux premiers ports de voie aller et retour PD1b et PD1a et aux seconds ports de voie aller et retour PD2b et PD2a de la mémoire 13. Ces convertisseurs garantissent une continuité dans la structure des trames transitant entre carte CR1 et terminal T1 malgré une mémoire 13 nécessitant que les données transmises sous forme série dans les voies multiplex entrante et sortante soient transposés en parallèle par octet de trame de canal pour être appliquées aux ports de données de la mémoire 13.

Comme souligné précédemment, chaque canal bidirectionnel d'un hypercanal est aligné par des écritures puis des lectures retardées des octets relatifs aux canaux de voie aller et retour formant le canal bidirectionnel. Ces écritures et lectures retardées sont gérées par le **circuit d'alignement de canaux 15** adressé par le microcontrôleur 10, comme détaillé ci-dessous en référence à la figure 5.

Le circuit d'alignement de canaux 15 comprend deux compteurs 151 et 152 qui sont incrémentés sous la commande d'une base de temps 150, ainsi qu'une mémoire de retards 153 et un additionneur 154.

Il est supposé dans ce qui suit, que l'invention est mise en oeuvre entre deux terminaux T1 et T2 rattachés à des accès primaires du réseau RNIS offrant des voies multiplex à $2^P = 2^5 = 32$ canaux.

Les retards relatifs correcteurs entre canaux d'hypercanal, pour les deux canaux de voie aller et retour constituant chacun desdits canaux, sont mémorisés dans $2 \times 2^P = 64$ cases de la mémoire 153, ce qui correspond à $2^P$ cases de mémoire pour les canaux de voie aller de la voie multiplex sortante, et $2^P$ cases de mémoire pour les canaux de voie retour de la voie multiplex entrante. Chacune des $2 \times 2^P = 2^{P+1}$ cases de la mémoire 153 mémorise un mot à m bits, avec m = 8, ou selon d'autres variantes avec m multiple de 8, représentatif d'un retard relatif correcteur à appliquer à un canal de voie aller ou retour correspondant. Ces mots à m bits sont chargés, à travers un premier accès de la mémoire 153, dans les $2^{P+1}$ cases de cette mémoire 153 à travers des bus d'adresse et de données BAD connectés au microcontrôleur 10.

Le compteur 151 est un compteur modulo $2^{P+2} = 32 \times 4 = 128$ dont le cycle est égal à la période de trame dans les voies multiplex entrante et sortante. Il est incrémenté par la base de temps 150 à une fréquence $128/32 = 4$ fois supérieure à la fréquence d'octet $f_o$ de trame de voie multiplex. Ce compteur 151, d'une part, adresse alternativement en écriture puis en lecture chacun de $2^{P+1}$ sous-espaces de canal dans la mémoire 13 mémorisant respectivement des données relatives aux $2 \times 2^P$ canaux de voie aller et de voie retour, et, d'autre part, adresse en lecture via un second accès de la mémoire 153, lorsque l'un desdits sous-espaces de la mémoire 13 est adressé en lecture, la mémoire de retards 153 qui fournit en réponse un mot de retard correspondant à m bits. Pour cela le fil de sortie de poids faible du compteur 151 est appliqué à des entrées de sélection de lecture/écriture respectives des mémoires 153 et 13.

Chacune des adresses cycliques respectives à (P+1) bits fournie par le compteur 151 n'adresse que l'une des cases d'un sous-espace de canal dans la mémoire 13. A l'intérieur d'un sous-espace mémoire, les cases de mémoire sont adressées par le compteur 152 qui est un compteur modulo $2^m$ incrémenté à la fréquence de trame de multiplex ft. Ainsi chaque sous-espace de mémoire est constitué de $2^m$ cases de mémoire.

Les m fils de sortie du compteur 152 sont reliés à une première entrée parallèle de l'additionneur 154, et le port de données PD de la mémoire de retards est connectée à une seconde entrée parallèle de l'additionneur 154 à travers un bus à m fils.

Le fonctionnement cyclique en écriture et en lecture du circuit d'alignement de canaux est le suivant.

Lorsque le bit de poids le plus faible produit par le compteur 151 est à un état bas "0", les mémoires 153 et 13 sont sélectionnées en écriture, via leur entrées de sélection de lecture/écriture. Aucun mot de retard relatif correcteur n'est produit dans le bus reliant la mémoire 153 et l'additionneur 154, et l'additionneur reproduit en sortie le mot à m bits fourni par le compteur 152. Sous la commande de ces deux compteurs 151 et 152, des octets successifs relatifs à un même canal de voie aller ou retour sont écrits dans des cases successives d'un même sous-espace dans la mémoire 13, et cela de façon cyclique modulo $2^m$. Les cases d'un sous-espace de la mémoire 13 sont balayées cycliquement en écriture pour des écritures respectives d'octets successifs relatifs à un même canal de voie aller ou retour.

Lorsque le bit de poids le plus faible produit par le compteur 151 est à un état haut "1", les mémoires 153 et 13 sont sélectionnées en lecture. Un mot de retard relatif correcteur, correspondant au sous-espace mémoire de la mémoire 13 sélectionnée par le compteur 151, est produit dans le bus reliant la mémoire de retards 153 et l'additionneur 154. L'additionneur 154 fournit en réponse un mot d'adresse à m bits égal à la somme du mot de retard relatif correcteur à m bits produit par la mémoire 153 et du mot d'adresse de sous-espace de mémoire à m bits produit par le compteur 152.

Ainsi l'octet de canal de voie aller ou retour lu dans la mémoire 13 correspond à l'octet de canal écrit $[2^m$ -(valeur du mot de retard relatif correcteur)] périodes de trame auparavant.

Chacun des mots de retard relatif correcteur est donc déduit par soustraction du retard relatif correcteur $a_i$ ou $r_i$, tel que calculé selon le procédé de l'invention, au mot binaire $2^m$.

Il n'a été décrit jusqu'à présent, que des procédé et système d'alignement de canaux en des hypercanaux sans se préoccuper d'une éventuelle rupture d'un canal dans un hypercanal formé, ou d'une détection d'erreur durable par le terminal esclave T2, dans des données, telles qu'images numériques, qui lui sont transmises par le terminal maître T1.

Une solution simple consisterait, dans le cas de telle rupture ou détection d'erreur durable, à libérer l'ensemble des canaux de l'hypercanal. Cette solution n'est néanmoins pas optimale eu égard au temps requis ultérieurement pour de nouvelles réservation et formation par alignement de canaux, d'un nouvel hypercanal.

Typiquement, la rupture d'un canal est détecté par réception durable d'octets à huit "0" ou huit "1" dans ce canal. De même, la détection d'erreur dans les données transmises est effectuée au moyen d'une "couche liaison" (Modèle de référence OSI de l'ISO) établie sur l'hypercanal considéré.

Dans ces cas de dysfonctionnement d'un hypercanal, l'invention prévoit initialement le repérage du/des canaux défectueux et la suspension momentanée du trafic dans l'hypercanal.

Si N dénote le nombre de canaux initiaux dans l'hypercanal et M dénote le nombre de canaux défectueux, un hypercanal de secours comprenant (N-M-1) canaux est reconstruit. Cet hypercanal de secours résulte de la libération des M canaux défectueux et d'un canal non défectueux, dit canal de référence, qui dans un hypercanal auxiliaire fait office de référence de retard relativement aux canaux de l'hypercanal de secours. L'hypercanal de secours est alors immédiatement rétabli et supporte naturellement un trafic moindre que l'hypercanal initial.

Dans l'hypercanal auxiliaire sont alignés M nouveaux canaux et ledit canal de référence par calcul de retards relatifs correcteurs, comme décrit précédemment.

Le trafic dans l'hypercanal de secours est alors momentanément suspendu, le temps d'opérer un fusionnement de celui-ci avec le canal auxiliaire. L'hypercanal résultant de ce fusionnement est alors rétabli et le trafic initial peut reprendre dans les N canaux de cet hypercanal de fusion.

Bien que la description précédente se fixe à titre d'exemple non limitatif à une réalisation ayant trait à un réseau de télécommunications à multiplexage temporel de canaux bidirectionnels de type RNIS, le procédé selon l'invention peut être également mis en oeuvre dans tout type de réseau à multiplexage temporel de canaux bidirectionnels dès lors qu'il y a la connexité numérique des canaux bidirectionnels, c'est à dire que ces canaux sont mis à la dispotion des usagers sous forme numérique. Il n'est par contre pas nécessaire qu'il y ait intégrité numérique de la liaison entre terminaux T1 et T2, c'est à dire que la liaison soit numérique de bout en bout.

## Revendications

1 - Procédé pour aligner l canaux élémentaires bidirectionnels à faible débit, en des canaux alignés formant un hypercanal à débit élevé, l étant un entier supérieur à 1,

chacun desdits canaux élémentaires étant constitué d'un canal de voie aller et d'un canal de voie retour associé au canal de voie aller, et étant établi entre des premier et second terminaux (T1,T2) à travers un réseau à multiplexage temporel (RT), lesdits I canaux élémentaires subissant des délais de transit respectifs différents à travers le réseau (RT) qui sont compensés dans l'hypercanal, le procédé comprenant une mesure de I délais de transit aller-retour de canal élémentaire par réception dans le premier terminal (T1) d'une séquence prédéterminée (S) émise par le premier terminal (T1) dans les I canaux de voie aller et réémise par rebouclages à travers le second terminal (T2) dans lesdits I canaux de voie retour associés respectifs,

caractérisé en ce qu'il comprend, en outre, les étapes suivantes :

rebouclage à travers le second terminal (T2), de chacun des I canaux de voie aller sur l'un respectif des I canaux de voie retour qui est différent du canal de voie retour associé audit chacun des I canaux de voie aller, pour former I canaux bouclés croisés,

émission de la séquence prédéterminée (S) dans les canaux de voie aller des I canaux bouclés croisés par le premier terminal (T1),

mesure de I délais de transit aller-retour de canal croisé par réception dans le premier terminal (T1) de ladite séquence prédéterminée (S) émise dans les I canaux de voie aller et réémise par rebouclages à travers le second terminal (T2) dans les canaux de voie de retour des I canaux bouclés croisés, et

calcul de 2 x I retards relatifs de voie aller et de voie retour à imposer aux canaux de voie aller et de voie retour en dépendance des délais de transit aller-retour de canal bouclé et de canal croisé mesurés.

**2 -** Procédé conforme à la revendication 1, caractérisé en ce que ledit calcul consiste à résoudre un système d'équations linéaires dans lequel le délai de transit aller-retour mesuré d'un canal élémentaire bouclé donné est égal à la somme de délai de transit aller et délai de transit retour respectifs dans les canaux de voies aller et retour constituant ledit canal bouclé donné et dans lequel le délai de transit aller-retour mesuré d'un canal bouclé croisé est égal à la somme de délai de transit aller et délai de transit retour respectifs dans les canaux de voies aller et retour constituant ledit canal bouclé croisé donné, les délais de transit aller et délais de transit retour étant des retards relatifs par rapport à l'un desdits délais de transit déterminé de manière arbitraire.

**3 -** Procédé conforme à la revendication 1 ou 2 mis en oeuvre relativement à plusieurs groupes comprenant chacun plusieurs canaux élémentaires afin de former plusieurs hypercanaux à débits élevés entre lesdits deux terminaux (T1,T2).

**4 -** Procédé conforme à l'une quelconque des revendications 1 à 3, caractérisé en ce que lesdits canaux élémentaires sont, au niveau desdits deux terminaux (T1,T2), des canaux temporels multiplexés dans des trames montantes et descendantes successives ayant une période prédéterminée, et en ce que ladite séquence prédéterminée (S) est constituée de mots binaires codés successifs qui résultent d'un codage pseudoaléatoire de type polynômial et qui sont émis, par le premier terminal (T1) dans chaque canal de voie aller respectivement dans des trames montantes successives pour mesurer chacun des délais de transit aller-retour de canaux élémentaire et croisé comprenant ledit chaque canal de voie aller.

**5 -** Procédé conforme à la revendication 4, caractérisé en ce que, pour une étape de mesure, la séquence prédéterminée (S) est considérée comme effectivement reçue dans le premier terminal (T1) dès lors que des mots binaires codés successifs de ladite séquence émis dans un canal de voie aller sont reçus en nombre prédéterminé dans le premier terminal (T1), un délai de transit aller-retour étant mesuré par le premier terminal (T1) comme égal au produit de la période de trame par une différence de rangs, relativement à ladite séquence prédéterminée émise, (S) entre des mots binaires codés qui sont émis et reçus.

**6 -** Procédé conforme à la revendication 3 et la revendication 4 ou 5, caractérisé par les étapes suivantes :

repérage de canaux défectueux dans l'un desdits hypercanaux par détection de rupture de canal ou détections répétitives d'erreurs dans des données transmises dans un canal élémentaire dudit un des hypercanaux,

libération des canaux défectueux et d'un canal non défectueux dans ledit un des hypercanaux en un hypercanal de secours à un débit inférieur au débit élevé dudit un des hypercanaux,

étapes énoncées à la revendication 1 pour aligner ledit canal non défectueux et des canaux en un nombre égal au nombre de canaux défectueux en un hypercanal auxiliaire, par calcul de retards relatifs correcteurs de voie aller et de voie retour à imposer aux canaux de voie aller et de voie retour dudit canal auxiliaire, et

fusion dudit hypercanal de secours et dudit hypercanal auxiliaire en un nouveau hypercanal ayant un débit égal au débit élevé dudit un des hypercanaux.

**7 -** Système pour la mise en oeuvre du procédé conforme à l'une quelconque des revendications 4 à 6, comprenant lesdits premier et second terminaux (T1,T2) rattachés audit réseau (RT) à travers des voies multiplex temporelles entrantes et sortantes, caractérisé en ce que le premier terminal (T1) comprend

des moyens de commande (T1,10) pour produire des mots de commande qui sont relatifs à l'établissement de canaux élémentaires, au rebouclage entre canaux de voie aller et canaux de voie retour des canaux élémentaires établis, et à la formation et la libération d'hypercanal, et qui sont émis chacun vers le second terminal (T2) dans un canal de voie aller établi libre n'appartenant pas à un hypercanal, pour mémoriser lesdits mots codés successifs de ladite séquence dans une première mémoire tabulée, et pour mesurer lesdits délais de transit aller-retour de canal élémentaire et lesdits délais de transit aller-retour croisé de canal croisé, et

pour l'un des hypercanaux ayant I canaux élémentaires bidirectionnels,

des moyens de mémoire à double accès (13) pour mémoriser dans 2 x I sous-espaces de mémoire respectifs des mots de données des I canaux de voie aller et I canaux de voie retour desdits I canaux élémentaires, et

des moyens d'alignement de canaux (15) pour imposer lesdits retards relatifs correcteurs de voie aller et voie retour respectivemment auxdits canaux de voie aller et voie retour par adressage en écriture et adressage retardé en lecture desdits mots de données de canal de voie aller et voie retour mémorisés dans lesdits moyens de mémoire (13), et

en ce que le second terminal (T2) comprend

des moyens de commande (T2,20) pour produire des mots de réponse qui sont émis chacun, en réponse à l'un respectif desdits mots de commande, vers le premier terminal (T1) dans un canal de voie retour associé au canal de voie aller libre dans lequel est émis ledit un respectif des mots de commande, et

des moyens de bouclage (21,22) pour reboucler au moins un canal de voie aller sur un canal de voie retour en réponse à au moins des mots de commande prédéterminé.

**8 -** Système conforme à la revendication 7, caractérisé en ce que lesdits moyens d'alignement de canaux (15) comprennent :

une mémoire de retards (153) à 2 x I cases de mémoire respectives pour mémoriser 2 x I mots de retard relatif correcteur entre canaux relatifs aux I canaux de voie aller et aux I canaux de voie retour desdits I canaux élémentaires respectifs,

un premier compteur binaire (151) incrémenté à quatre fois une fréquence de mot de données pour adresser successivement chacune desdites 2 x I cases de la mémoire de retards (153) et simultanément respectivement chacun desdits 2 x I sous-espaces mémoire desdits moyens de mémoire (13), alternativement en écriture et lecture,

un second compteur binaire (152) incrémenté à une fréquence de trame (ft) pour produire des mots d'adresse d'écriture successifs, et

un additionneur (154) pour additionner l'un desdits mots de retard relatif correcteur mémorisé dans l'une des 2 x I cases de ladite mémoire de retards (153) qui est adressée par ledit premier compteur (151), à l'un des mots d'adresse d'écriture produit par ledit second compteur (152), en un mot d'adresse de lecture des moyens de mémoire (13), et pour reproduire ledit un des mots d'adresse d'écriture lorsque ladite mémoire de retards est adressée en lecture par ledit premier compteur (151) respectivement lorsque ladite mémoire de retards (153) et les moyens de mémoire 13 sont adressés en lecture et en écriture par ledit premier compteur binaire (151).

**9 -** Système conforme à la revendication 7 ou 8, dans lequel le premier terminal (T1) comprend

des premiers moyens de conversion série-parallèle et parallèle-série (12) respectivement pour convertir des mots de données de canal de voie retour multiplexés en série fourni par le réseau (RT) dans la voie multiplex entrante en des mots de données parallèles successifs à écrire dans lesdits moyens de mémoire (13), et pour convertir des mots de données de canal de voie aller parallèles successifs lus dans lesdits moyens de mémoire (13) en des mots de données de canal de voie aller multiplexés en série à transmettre dans la voie multiplex sortante vers ledit réseau,

des seconds moyens de conversion parallèle-série et série-parallèle (14) respectivement pour convertir des mots de données parallèles de canal de voie retour successifs lus dans lesdits moyens de mémoire (13) en des mots de données de canal multiplexés en série à transmettre vers le premier terminal (T1), et pour convertir des mots de données de canal de voie aller multiplexés en série fournis par ledit second terminal (T1) en des mots de données successifs parallèles à écrire dans lesdits moyens de mémoire (13).

*FIG.1*

TERMINAL (MAITRE) — T1

INTERFACE MAITRE — IM(FIG.4)

aller

CARTE RESEAU — CR1

retour

— 30B+D

TERMINAISON DE RESEAU — TNR1

TERMINAL DE LIGNE — TL1

V

SAT

CR1 — COMMUTATEUR DE RATTACHEMENT

N1  N3  N5

N2  N4

RMT

CR2 — COMMUTATEUR DE RATTACHEMENT

V

TERMINAL DE LIGNE — TL2

TERMINAISON DE RESEAU — TNR2

— 30B+D

CARTE RESEAU — CR2

INTERFACE ESCLAVE — IE(FIG.3)

TERMINAL (ESCLAVE) — T2

*FIG.2*

```
              ┌─────────────┐
              │    DEBUT     │
              └─────────────┘
                     │
            ┌──────────────────┐
            │ BOUCLAGE CROISE  │──E1
            └──────────────────┘
                     │
               ┌──────────┐
               │  i = 0   │──E10
               └──────────┘
                     │
 ┌────────────────────────────────────────────┐
 │ Bouclage de la voie aller du canal $C_i$    │
 │    sur la voie retour du canal $C_j$ ,      │──E11
 │       avec j=(i+k)[modulo(I)]               │
 │    k étant un entier prédéterminé           │
 └────────────────────────────────────────────┘
                     │
         ┌─────────────────────────┐
         │ Emission séquence S dans $C_i$ │──E12
         └─────────────────────────┘
                     │
       ┌───────────────────────────┐
       │ Réception séquence S dans $C_j$ │──E13
       └───────────────────────────┘
                     │
        ┌──────────────────────────┐
        │ Mesure $AR_{i,j} = A_i + R_j$ │──E14
        └──────────────────────────┘
                     │
          ┌───────────────────────┐
          │ i = i+1[modulo(I)]    │──E15
          └───────────────────────┘
                     │
         E16 ─◇ i = 0 ◇─── non
                 │oui
            ┌──────────────┐
            │ AUTOBOUCLAGE │──E2
            └──────────────┘
                     │
               ┌──────────┐
               │  i = 0   │──E20
               └──────────┘
                     │
 ┌────────────────────────────────────────────┐
 │ Bouclage de la voie aller du canal $C_i$    │──E21
 │    sur la voie retour du canal $C_i$        │
 └────────────────────────────────────────────┘
                     │
         ┌─────────────────────────┐
         │ Emission séquence S dans $C_i$ │──E22
         └─────────────────────────┘
                     │
       ┌────────────────────────────────┐
       │ Réception $C_i$ et mesure délai $AR_{i,i}$ │──E23
       └────────────────────────────────┘
                     │
               ┌──────────┐
               │  i = i+1 │──E24
               └──────────┘
                     │
         E25 ─◇ i = l ◇─── non
                 │oui
            ┌────────────────────┐
            │ CALCUL $A_i$ et $R_i$ │──E3
            └────────────────────┘
                     │
 ┌────────────────────────────────────────────┐
 │ $\begin{cases} AR_{i,j} = A_i + R_j \\ AR_{i,i} = A_i + R_i \end{cases}$  pour $0 \leqslant i < I$ │──E30
 └────────────────────────────────────────────┘
```

# FIG.3

de/vers TNR2

CR2

CARTE RESEAU

LFH

LFD

CIRCUIT DE GENERATION
DE SIGNAUX D'HORLOGE

20'

20

MATRICE
DE
COMMUTATION

21

LSP

MICROCONTROLEUR

INTERFACE ESCLAVE

IE

de/vers T2

# FIG.4

de/vers T1

IM

INTERFACE MAITRE

CONVERTISSEURS
série      série
14

PD2b    PD2a

PA

MEMOIRE DE CANAUX
R/W
13

CIRCUIT D'ALIGNEMENT DE CANAUX (FIG.5)
15

PD1b    PD1a

CONVERTISSEURS
12
série      série

BAD

10

MICROCONTROLEUR

LSP

MATRICE DE COMMUTATION
11

H

CIRCUIT DE GENERATION DE SIGNAUX D'HORLOGE
10'

LFH

CARTE RESEAU
CR1

# FIG.5

de/vers 13

p+2

m

ADDITIONNEUR
(m + m) — 154

m

m

PD

153

p+2

MEMOIRE DE
RETARDS

152

COMPTEUR
$2^m$

p+2

151

chargement
des retards

COMPTEUR
$2^{p+2}$

BAD

$f_t$

$f_0$

150 — BASE DE TEMPS

CIRCUIT D'ALIGNEMENT DE CANAUX

15

de 10

EP 0 631 404 A1

Office européen
des brevets

**RAPPORT DE RECHERCHE EUROPEENNE**

Numero de la demande
EP 94 40 1325

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| D,A | US-A-4 577 312 (NASH)<br>* colonne 1, ligne 50 - ligne 68 *<br>* colonne 3, ligne 47 - colonne 4, ligne 30 *<br>* colonne 5, ligne 67 - colonne 6, ligne 18 *<br>* colonne 8, ligne 30 - ligne 47 *<br>* colonne 9, ligne 41 - colonne 13, ligne 5; figures 1,4,6,9,10 *<br>--- | 1-7 | H04J3/16<br>H04J3/06 |
| A | EP-A-0 540 452 (IBM)<br><br>* colonne 2, ligne 55 - colonne 3, ligne 46 *<br>* colonne 8, ligne 26 - colonne 10, ligne 20 *<br>* colonne 11, ligne 51 - ligne 57 *<br>* colonne 17, ligne 12 - colonne 19, ligne 40; figures 3,7 *<br>----- | 1,3-5,<br>7-9 | |

DOMAINES TECHNIQUES
RECHERCHES (Int.Cl.5)

H04J
H04L

Le présent rapport a été établi pour toutes les revendications

| Lieu de la recherche | Date d'achèvement de la recherche | Examinateur |
|---|---|---|
| LA HAYE | 15 Septembre 1994 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

22